# EUROPÄISCHE PATENTANMELDUNG

(11) **EP 4 617 100 A1**
(43) Veröffentlichungstag der Anmeldung: **17.09.2025**
(21) Anmeldenummer: 24163298.3
(22) Anmeldetag: 13.03.2024
(51) Int. Cl.: B60L 1/00, B60L 15/02, B60L 15/20, B60L 50/51, B61C 3/02, B60M 1/28, B61D 15/08, E01B 29/00, E01B 31/17

(54) **ELEKTRISCHER ANTRIEB FÜR EIN SYSTEM ZUR WEICHENINSTANDHALTUNG**

(71) Anmelder: Rudolph, Christian, 21149 Hamburg (DE); Wuttke, Thomas, 21107 Hamburg (DE)
(72) Erfinder: Rudolph, Christian, 21149 Hamburg (DE); Brüns, Michael, 22453 Hamburg (DE); Wuttke, Thomas, 21107 Hamburg (DE)
(74) Vertreter: Eisenführ Speiser

(57) **Zusammenfassung**

Die vorliegende Erfindung beschreibt einen elektrischen Antrieb für ein, bevorzugt mobiles, System zur Instandhaltung einer Schiene, insbesondere zur Weicheninstandhaltung, umfassend: eine elektrische Maschine, die dazu eingerichtet ist, eine elektrische Energie in ein mechanisches Drehmoment zu wandeln, wobei die elektrische Maschine: drehmomentübertragend mit einer Schienenbearbeitungsvorrichtung verbindbar ist; und als Axialfluss-Drehstrom-Maschine ausgebildet ist.

## Beschreibung

Die vorliegende Anmeldung betrifft einen elektrischen Antrieb für ein System zur Instandhaltung einer Schiene sowie ein System zur Instandhaltung einer Schiene mit einem solchen Antrieb.

In der Bahntechnik kommen eine Vielzahl von Systemen zur Instandhaltung von Schienen zum Einsatz, die unter anderem nach ihrem Antrieb unterschieden werden, beispielsweise verbrennungsmotorischer Antrieb, also ein Antrieb mit einem Verbrennungsmotor, oder elektromotorischer Antrieb, also beispielweise ein Antrieb mit netzgespeistem Elektromotor.

Wesentliche Nachteile des verbrennungsmotorischen Antriebs liegen beispielsweise in der Schadstoff- und/oder Schallemission sowie der schwingungstechnischen Belastungen und der schlechten Regelbarkeit von Verbrennungsmotoren im Allgemeinen.

Bei netzgespeisten elektrischen Antrieben fallen zwar einige der zuvor genannten Nachteile des Verbrennungsmotors weg, jedoch liegt nach wie vor eine vergleichsweise hohe

Gewichtsbelastung sowie eine schlechte Regelbarkeit vor, insbesondere, wenn der elektrische Antrieb als netzgespeiste Norm-Asynchronmaschine ausgeführt ist.

Unter Norm-Asynchronmaschinen werden hierin insbesondere Maschinen verstanden, die einem gewissen Standard entsprechen, wie beispielsweise der DIN-Norm, der ISO-Norm, der europäischen Norm (kurz: EN) oder dergleichen.

Hinzu kommt, dass bei netzgespeisten elektrischen Antrieben ein Schleppkabel vom Antrieb bzw. System zum Anschluss an die elektrische Energieversorgung erforderlich ist, was die Arbeitsflexibilität stark einschränkt.

Es sind auch vereinzelte batterie-basierte Lösungen bekannt, die in der Arbeits- und Betriebsdauer äußerst limitiert sind, insbesondere da die Systeme mit zwei Fachkräften bewegt werden müssen, darf das System zur Instandhaltungen von Schienen meist nicht mehr als etwas über 100kg wiegen. Dadurch warten die bisherigen batterie-basierten Lösungen mit äußerst ineffizienten elektrischen Antrieben mit geringer Leistungs- und Energiedichte auf, sodass die bekannten Systeme teilweise nicht einmal eine Arbeits- und Betriebsdauer von einer Stunde aufweisen, teilweise unter starker Antriebsleistung sogar nur 15 Minuten und weniger.

Aufgabe der vorliegenden Erfindung ist es daher, wenigstens eines der obengenannten Probleme zu adressieren. Insbesondere soll ein elektrischer Antrieb bereitgestellt werden, der eine Verbesserung gegenüber dem bekannten Stand der Technik schafft - wenigstens soll aber eine Alternative zu bisher bekannten Lösungen bereitgestellt werden.

Erfindungsgemäß wird somit ein elektrischer Antrieb vorgeschlagen, insbesondere für ein, bevorzugt mobiles, System zur Instandhaltung einer Schiene, insbesondere zur Weicheninstandhaltung.

Bevorzugt umfasst der elektrische Antrieb wenigstens eine elektrische Maschine, die dazu eingerichtet ist, eine elektrische Energie in ein mechanisches Drehmoment zu wandeln, wobei die elektrische Maschine drehmomentübertragend mit einer Schienenbearbeitungsvorrichtung verbindbar und als Drehstrommaschine mit Axialfluss ausgeführt ist.

Unter einer elektrischen Maschine wird hierin insbesondere ein elektromechanischer Wandler verstanden, der dazu eingerichtet ist, elektrische Energie in mechanische Energie zu wandeln und/oder umgekehrt. Bevorzugt wandelt die elektrische Maschine die elektrische Energie in mechanische Energie mittels einer Oszillations- oder Rotationsbewegung.

Bevorzugt ist die elektrische Maschine als Motor ausgebildet und dazu eingerichtet, elektrische Energie mittels einer Rotationsbewegung in mechanische Energie zu wandeln, insbesondere in ein mechanisches Drehmoment und/oder eine mechanische Drehzahl.

Es wird also insbesondere vorgeschlagen, die, von der elektrischen Maschine aus elektrischer Energie erzeugte mechanische Energie in Form einer Drehbewegung bereitzustellen, beispielsweise an einer Welle.

Hierfür weist die elektrische Maschine beispielsweise einen Stator zur Aufnahme der elektrischen Energie und einen Rotor zur Abgabe der mechanischen Energie auf, wobei der Rotor bevorzugt drehbar am Stator gelagert und drehfest mit der Welle verbunden ist.

Bevorzugt ist die elektrische Maschine dazu eingerichtet, mit einer Schienenbearbeitungsvorrichtung mechanisch gekoppelt zu werden, beispielsweise über eine Welle oder dergleichen, und zwar insbesondere so, dass die elektrische Maschine der Schienenbearbeitungsvorrichtung eine mechanische Energie zur Verfügung stellt, insbesondere in Form einer Drehbewegung, beispielsweise über ein Drehmoment und/oder eine Drehzahl.

Die Schienenbearbeitungsvorrichtung wandelt dann diese so bereitgestellte mechanische Energie weiter, beispielsweise in eine rotierende oder eine oszillierende Bewegung eines Schienenbearbeitungskopfes mittels dem die Schiene dann geschliffen oder anderweitig bearbeitet wird.

Bevorzugt ist die elektrische Maschine als Drehstrommaschine mit Axialfluss ausgeführt.

Die elektrische Maschine ist also so ausgeführt, dass sich im laufenden Betrieb ein Luftspalt-Magnetfeld einstellt, welches parallel zur mechanischen Drehachse der elektrischen Maschine verläuft, wodurch ein Axialfluss entsteht. Die elektrische Maschine weist also insbesondere keinen Radialfluss im Luftspalt auf.

Als Luftspalt wird in der Elektrotechnik im Rahmen magnetischer Kreise der Raum oder Abstand zwischen zwei gegenüberliegenden Flächen bezeichnet, welche einen magnetischen Fluss führen, beispielsweise der Raum zwischen Rotor und Stator der elektrischen Maschine.

Die elektrische Maschine ist beispielsweise als Drehstrom-Asynchronmaschine oder als Drehstrom-Synchronmaschine ausgeführt. Auch kann die elektrische Maschine einen oder mehr Statoren und/oder einen oder mehr Rotoren aufweisen. Weist die elektrische Maschine beispielsweise einen Stator auf, wird dieser Aufbau auch als Einzel-Stator bezeichnet. Selbiges gilt auch für den Rotor. Weist die elektrische Maschine beispielsweise zwei Statoren auf, wird dieser Aufbau auch als Doppel-Stator bezeichnet. Aus dieser Nomenklatur ergeben sich eine Vielzahl von Aufbauten, wie beispielsweise Einzel-Stator und Einzel-Rotor, Einzel-Stator und Doppel-Rotor oder dergleichen.

Bevorzugt weist die Drehstrommaschine in der Ausführung als Synchronmaschine eine Fremderregung oder eine Permanentmagneterregung auf.

Beispielsweise ist die Drehstrommaschine als Drehstrom-Asynchronmaschine mit Doppel-Stator und Einzel-Rotor oder Einzel-Stator und Einzel-Rotor oder Einzel-Stator mit Doppel-Rotor ausgeführt oder als Drehstrom-Synchronmaschine mit Einzel-Stator und Doppel-Rotor oder Doppel-Stator und Einzel-Rotor oder Einzel-Stator und Einzel-Rotor, insbesondere mit Permanenterregung.

Die hierin beschriebenen Bauarten von Drehstrommaschinen mit Axialfluss weisen eine besonders hohe Leistungs- und Energiedichte auf, wodurch der Antrieb ein relativ geringes Gewicht und/oder Baugröße aufweist. Zudem sind die hierin beschriebenen Bauarten von Drehstrommaschinen mit Axialfluss äußerst robust, was insbesondere für Arbeitsmaschinen wünschenswert ist. Die hierin beschriebenen Bauarten von Drehstrommaschinen mit Axialfluss sind zudem sowohl gravimetrisch als auch volumetrisch vorteilhaft gegenüber anderen Bauarten von Drehstrommaschinen.

Insbesondere die hohe Leistungs- und Energiedichte der Drehstrommaschine mit Axialfluss ermöglicht eine längere Arbeits- und Betriebsdauer der Arbeitsmaschine, ca. die doppelte Arbeitsdauer von bisher bekannten batterie-elektrischen Versionen, beispielsweise 2 Stunden und mehr.

Bevorzugt weist die elektrische Maschine wenigstens einen elektrischen Stator auf, der mit einem elektrischen Speicher verbindbar ist, beispielsweise über einen Umrichter, insbesondere so, dass der elektrische Speicher elektrische Energie für die elektrische Maschine bereitstellt, die dann in mechanische Energie gewandelt werden kann.

Bevorzugt ist der elektrische Stator der elektrischen Maschine dreiphasig ausgebildet.

Bevorzugt ist die elektrische Maschine als permanentmagneterregte Synchronmaschine mit Axialfluss ausgeführt.

Dies bedeutet insbesondere, dass die elektrische Maschine als Synchronmaschine ausgebildet ist und Permanentmagneten aufweist, die fürdie Erregung der elektrischen Maschine derart angeordnet sind, dass sich im laufenden Betrieb der Synchronmaschine ein Luftspalt-Magnetfeld einstellt, welches parallel zur mechanischen Drehachse der Synchronmaschine verläuft.

Derartige Maschinen, also elektrische Maschinen, die als permanentmagneterregte Synchronmaschine mit Axialfluss ausgebildet sind, werden auch als permanentmagneterregter Axialfluss-Synchronmotor (kurz: AFPMSM) bezeichnet.

Bevorzugt ist die elektrische Maschine mit Doppel-Stator und Einzel-Rotor oder Einzel-Stator und Doppel-Rotor ausgeführt.

Die elektrische Maschine weist also beispielsweise zwei elektrische Statoren und einen elektrischen Rotor auf und ist somit als Doppel-Stator und Einzel-Rotor ausgeführt.

Alternativ ist die elektrische Maschine bevorzugt mit einem elektrischen Stator und zwei elektrischen Rotoren ausgeführt, also als Einzel-Stator und Doppel-Rotor.

Vorzugsweise weist der elektrische Antrieb eine Steuereinheit auf, die dazu eingerichtet ist, die elektrische Maschine feldorientiert zu regeln.

Hierfür wird beispielsweise der Stator der elektrischen Maschine an einen Umrichter angeschlossen, der über die Steuereinheit mittels einer Vektorregelung angesteuert wird.

Die Vektorregelung, auch als feldorientierte Regelung bezeichnet, ist ein Regelungskonzept, bei dem sinusförmige - oder als weitgehend sinusförmig angenommene - Wechselgrößen (beispielsweise Wechselspannungen und Wechselströme) nicht direkt in ihrem zeitlichen Momentanwert, sondern in ihren auf den Lagewinkel eines rotierenden Koordinatensystems bezogenen Komponenten geregelt werden. Zu diesem Zweck werden die erfassten Wechselgrößen in ein stationär mit der Frequenz der Wechselgrößen rotierendes Koordinatensystem übertragen. Innerhalb des rotierenden Koordinatensystems ergeben sich dann aus den Wechselgrößen Gleichgrößen, auf die alle üblichen Verfahren der Regelungstechnik angewandt werden können.

Durch die Vektorregelung weist die elektrische Maschine einen sehr guten Stell- und Arbeitsbereich auf, was in Bezug auf die anspruchsvollen Instandhaltungsarbeiten an Schienen besonders vorteilhaft ist.

Bevorzugt ist die Steuereinheit dazu eingerichtet, sechs Schalter eines bzw. des Umrichters anzusteuern, wobei bevorzugt jeweils zwei leistungselektronische Schalter einer von drei symmetrischen Phasen zugeordnet sind. Sowohl der Umrichter als auch die elektrische Maschine sind also bevorzugt dreiphasig ausgeführt, insbesondere mit einem dreiphasigen, um 120° verschobenen, elektrischen System.

Vorzugsweise ist die Steuereinheit dazu eingerichtet, die elektrische Maschine in ihrer Drehzahl zu regeln.

Eine derartige geregelte elektrische Maschine wird auch als drehzahlgeregelte elektrische Maschine bezeichnet. Dies bedeutet insbesondere, dass die mechanische Drehzahl der elektrischen Maschine innerhalb des zur Verfügung stehenden Drehmomentstellbereichs frei eingestellt werden kann, insbesondere unabhängig von der Last.

Dadurch, dass die Maschine in ihrer Drehzahl geregelt wird sowie Schleifkörperdrehzahl und Maschinendrehzahl aufeinander abgestimmt sind, kann auf ein Getriebe am Ausgang der elektrischen Maschine verzichtet werden.

Die feldorientierte Drehzahlregelung kann dabei mittels einer Vielzahl von verschiedenen Ausführungsformen erfolgen. Bevorzugt wird die Drehzahl der elektrischen Maschine mittels einer Phasenstrom-Drehzahl-Erfassung oder einer Zwischenkreisstrom-Drehzahl-Erfassung oder einer Zwischenkreisspannung-Phasenstrom-Erfassung oder einer Zwischenkreisspannung-Zwischenkreisstrom-Erfassung realisiert.

Bei einer Phasenstrom-Drehzahl-Erfassung wird sowohl der Phasenstrom der elektrischen Maschine als auch die mechanische Drehzahl der elektrischen Maschine erfasst, um die mechanische Drehzahl der elektrischen Maschine einzustellen, insbesondere lastunabhängig einzustellen. Die Erfassung des Phasenstroms erfolgt dabei bevorzugt 2-phasig im Statorkreis der elektrischen Maschine, insbesondere, wenn die elektrische Maschine einen dreiphasigen Stator aufweist.

Bei einer Zwischenkreisstrom-Drehzahl-Erfassung wird sowohl der Zwischenkreisstrom als auch die mechanische Drehzahl der elektrischen Maschine erfasst, um die mechanische

Drehzahl der elektrischen Maschine einzustellen, insbesondere lastunabhängig einzustellen. Die Erfassung des Zwischenkreisstroms erfolgt dabei insbesondere im Zwischenkreis eines Umrichters, der statorseitig mit der elektrischen Maschine elektrisch verbunden ist.

Bei einer Zwischenkreisspannung-Phasenstrom-Erfassung wird sowohl die Zwischenkreisspannung als auch der Phasenstrom der elektrischen Maschine erfasst, um die mechanische Drehzahl der elektrischen Maschine einzustellen, insbesondere lastunabhängig einzustellen. Die Erfassung der Zwischenkreisspannung erfolgt dabei insbesondere im Zwischenkreis eines Umrichters, der statorseitig mit der elektrischen Maschine elektrisch verbunden ist. Die Erfassung des Phasenstroms erfolgt dabei bevorzugt 2-phasig im Statorkreis der elektrischen Maschine, insbesondere, wenn die elektrische Maschine einen dreiphasigen Stator aufweist.

Bei einer Zwischenkreisspannung-Zwischenkreisstrom-Erfassung wird sowohl die Zwischenkreisspannung als auch der Zwischenkreisstrom erfasst. Die Erfassung der Zwischenkreisspannung erfolgt dabei insbesondere im Zwischenkreis eines Umrichters, der statorseitig mit der elektrischen Maschine elektrisch verbunden ist. Die Erfassung des Zwischenkreisstroms erfolgt dabei insbesondere im Zwischenkreis eines Umrichters, der statorseitig mit der elektrischen Maschine elektrisch verbunden ist.

Insbesondere die Drehzahlregelung mit Erfassung der Zwischenkreisspannung führt dazu, dass kein Drehzahlsensor mehr benötigt wird, was in der mit (Fein-)Staub belasteten Umgebung eines Schieneninstandhaltungssystems besonders vorteilhaft ist, insbesondere da ein derartiges System ohne Drehzahlsensor deutlich robuster bzw. fehlerunanfälliger ist.

In einer bevorzugten Ausführungsform, insbesondere bei einer Zwischenkreisspannung-Phasenstrom-Erfassung oder einer Zwischenkreisspannung-Zwischenkreisstrom-Erfassung, wird zusätzlich ein Drehzahlmodell verwendet. Durch die Verwendung eines Drehzahlmodells geht die Information der Drehzahl auch bei einer Zwischenkreisspannung-Phasenstrom-Erfassung oder einer Zwischenkreisspannung-Zwischenkreisstrom-Erfassung nicht verloren. Die Information der Drehzahl wird nämlich dann durch das Drehzahlmodell bereitgestellt. Sofern auch eine Drehzahlerfassung mit Drehzahlsensor vorliegt, kann das Drehzahlmodell dazu verwendet werden, die Genauigkeit der Drehzahlerfassung zu überprüfen und bei einem Drehzahlsensorausfall den Weiterbetrieb der Maschine ohne Drehzahlsensor sicherzustellen oder einen sicheren Betriebszustand des geregelten Antriebs anzufahren.

Alternativ oder zusätzlich regelt die Steuereinheit die elektrische Maschine mittels eines Drehzahl-Drehmoment-Steuerprofils und/oder eines Sollwert-Generators und/oder einer Soll-Wert-Rampe.

Vorzugsweise weist der elektrische Antrieb einen Anschluss für einen elektrischen Speicher, insbesondere Akkumulator, und/oder einen bzw. den elektrischen Speicher, insbesondere Akkumulator, auf, wobei der elektrische Speicher dazu eingerichtet ist, die elektrische Maschine mit der elektrischen Energie zu versorgen.

Es wird also insbesondere vorgeschlagen, die elektrische Energie für den elektrischen Antrieb durch einen elektrischen Speicher bereitzustellen, beispielsweise eine Batterie, bevorzugt ein Akkumulator, wie einem Lithium-Ionen-Akkumulator oder dergleichen.

Bevorzugt ist der elektrische Speicher als Akkumulator ausgebildet, also als elektrischwiederaufladbare Einheit. Hierfür weist der elektrische Speicher beispielsweise eine elektrische Verbindung in Form eines Kabels oder einer Buchse auf, mittels derer der elektrische Speicher aufgeladen werden kann, beispielsweise mittels 230V oder 400V Netzspannung.

Der elektrische Antrieb ist dabei insbesondere so ausgeführt, dass der elektrische Speicher als zusätzliches Modul im Antrieb untergerbacht werden kann, insbesondere so, dass der elektrische Speicher als Zukaufteil realisiert werden kann. Gleichwohl kann die Steuereinheit einen BUS aufweisen, mittels derer der elektrische Speicher und insbesondere der Ladezustand überwacht werden kann.

Durch die Verwendung eines elektrischen Speichers ergeben sich eine Vielzahl von Vorteilen gegenüber dem bekannten Stand der Technik, insbesondere gegenüber netzgespeisten elektrischen Antrieben. Beispielsweise wird durch die Verwendung eines elektrischen Speichers kein Schleppkabel mehr benötigt.

Der elektrische Speicher ist bevorzugt ferner so dimensioniert, dass der Antrieb bzw. das System wenigstens zwei Stunden arbeits- und betriebsbereit ist.

Vorzugsweise weist der elektrische Antrieb einen Umrichter auf, der zwischen einem bzw. dem elektrischen Speicher und der elektrischen Maschine angeordnet ist, wobei der Umrichter dazu eingerichtet ist, die elektrische Maschine mit elektrischer Energie aus dem elektrischen Speicher zu versorgen.

Der Umrichter ist also insbesondere statorseitig an der elektrischen Maschine angeordnet und/oder als Wechselrichter ausgeführt und versorgt die elektrische Maschine mit elektrischer Energie aus einem bzw. dem elektrischen Speicher.

Bevorzugt ist der Umrichter als dreiphasiger Wechselrichter ausgeführt und insbesondere mit dem dreiphasigen Stator der elektrischen Maschine verbunden.

Bevorzugt weist der Umrichter einen Zwischenkreis auf, wobei der Zwischenkreis eine zulässige Berührungsspannung von 120V oder weniger aufweist. Bevorzugt liegt die Zwischenkreisspannung bei 100V oder weniger, insbesondere 50V oder weniger.

Vorzugsweise weist der elektrische Antrieb in der Variante mit Zwischenkreisspannungs-Zwischenkreisstrom- oder Phasenstromerfassung keine Drehzahlerfassung und/oder kein Getriebe auf.

Der elektrische Antrieb ist also insbesondere nicht mit einer Drehzahlerfassung ausgerüstet.

Der elektrische Antrieb weist also insbesondere kein Getriebe auf.

Vorzugsweise umfasst der elektrische Antrieb ein Messmittel, das dazu eingerichtet ist, eine mechanische Größe, bevorzugt eine Drehzahl und/oder das mechanische Drehmoment, der elektrischen Maschine zu erfassen, insbesondere für die Regelung der elektrischen Maschine.

Alternativ und/oder zusätzlich umfasst der elektrische Antrieb ein Messmittel, das dazu eingerichtet ist, eine elektrische Größe, bevorzugt einen Statorstrom, der elektrischen Maschine zu erfassen, insbesondere für die Regelung der elektrischen Maschine.

Erfindungsgemäß wird ferner ein mobiles System zur Instandhaltung einer Schiene, insbesondere zur Weicheninstandhaltung, vorgeschlagen, umfassend ein Fahrgestell, ein Fahrwerk, eine Schienenbearbeitungsvorrichtung und einen elektrischen Antrieb, wie vorstehend und/oder nachstehend beschrieben, wobei die elektrische Maschine des elektrischen Antriebes drehmomentübertragend mit der Schienenbearbeitungsvorrichtung verbunden ist.

Schienen und insbesondere Weichen sind einer Vielzahl von verschiedenen mechanischen Belastungen ausgesetzt. Dies ist insbesondere der Tatsache geschuldet, dass nicht jedes Schienenfahrzeug gleichviel wiegt und/oder gleichschnell fährt. Jeder Schienenabschnitt und jede Weiche weist also seine eigene Abnutzung auf, was eine automatisierte Schienen- bzw. Weicheninstandhaltung nahezu unmöglich macht.

Hinzu kommt, dass die Belastungen an Weichen noch komplexer sind als an Schienen, wodurch eine Weicheninstandhaltung grundsätzlich anspruchsvoller ist als eine Schieneninstandhaltung.

Unter Schienen werden hierin insbesondere lineare Trag- und Führungselemente verstanden, die paarig und parallel zueinander im Abstand der Spurweite angeordnet den Fahrweg für Schienenfahrzeuge bilden. Die paarig und parallel zueinander angeordneten Schienen werden funktional auch als Gleis zusammengefasst. Mit Hilfe einer Weiche kann ein Gleis in zwei Gleise gegabelt oder ein zweites Gleis aus einem durchgehenden Gleis herausgeführt werden. Die Weiche ermöglicht Schienenfahrzeugen den Übergang von einem auf ein anderes Gleis ohne Unterbrechung der Fahrt.

Das hierin vorgeschlagene System ist also insbesondere als verfahrbares System, beispielweise als Fahrzeug, bevorzugt als Schienenfahrzeug, ausgebildet, insbesondere so, dass das Fahrzeug manuell auf Schienen verschiebbar ist, insbesondere durch Fachpersonal.

Bevorzugt ist das hierin beschriebene mobile System zur Instandhaltung einer Schiene als Schienenfahrzeug ausgebildet.

Das mobile System ist also insbesondere dazu eingerichtet, sich auf einer Schiene zu bewegen bzw. bewegt zu werden. Hierfür weist das mobile System beispielsweise Räder auf, die derart zu einander beabstandet sind, dass das mobile System auf einem Gleis verfahrbar ist.

Bevorzugt weist das mobile System wenigstens einen elektrischen Anschluss auf, der mit dem elektrischen Antrieb verbunden ist, wobei der elektrische Anschluss dazu eingerichtet ist, so mit einem elektrischen Speicher, insbesondere mit einem hierin beschriebenen elektrischen Speicher, verbunden zu werden, um den elektrischen Antrieb mit elektrischer Energie zu versorgen.

Bevorzugt ist das System nicht als automatisches System ausgeführt. Dies bedeutet insbesondere, dass sowohl der Vortrieb des Systems als auch die Arbeitsbewegung der Schienenbearbeitungseinheit manuell gesteuert werden. Der hierin beschriebene Antrieb leistet insbesondere nur die für den Arbeitsvorgang benötigten Drehzahlen. Das System ist also insbesondere kein vollautomatisiertes Fahrzeug, wie beispielsweise ein Roboter.

Bevorzugt ist das System so dimensioniert, dass es von zwei Menschen bewegt bzw. getragen werden kann. Insbesondere wiegt das System 150kg oder weniger, bevorzugt 120kg oder weniger. Das System ist also insbesondere als kompaktes System ausgeführt.

Das hierin beschriebene System ist insbesondere kein vollautomatisiertes Fahrzeug, wie beispielsweise ein Roboter.

Der elektrische Antrieb und/oder die elektrische Maschine sind insbesondere nicht im Rad oder Radkasten angeordnet, sondern bevorzugt auf dem Fahrgestellt.

Vorzugsweise weist die Schienenbearbeitungsvorrichtung wenigstens eine Schienenbearbeitungseinheit, bevorzugt eine Schleifeinrichtung und/oder eine Riffeleinrichtung und/oder eine Entgratungsvorrichtung, auf, die dazu eingerichtet ist, eine Beschaffenheit der Schiene zu modifizieren.

Bevorzugt wandelt die Schienenbearbeitungsvorrichtung die vom elektrischen Antrieb bereitgestellte mechanische Energie in eine rotierende Bewegung eines Schienenbearbeitungskopfes mittels dem die Schiene dann geschliffen oder anderweitig bearbeitet wird.

Bevorzugt ist das mobile System, also insbesondere der elektrische Antrieb und/oder die Schienenbearbeitungsvorrichtung und/oder der Schienenbearbeitungskopf und/oder die mechanische Struktur des mobilen Systems, derartig dimensioniert und/oder ausgeführt, dass es durch die Bearbeitung der Schiene mittels der Schienenbearbeitungsvorrichtung, insbesondere durch das Aufsetzen des Schienenbearbeitungskopfes auf die Schiene, zu einem Vortrieb kommt, der entlang der Schienen verläuft.

Hierdurch fungiert der elektrische Antrieb nicht nur als Antrieb für die Schienenbearbeitungsvorrichtung, sondern auch als Antrieb für das mobile System.

In einer bevorzugten Ausgestaltung ist das mobile System so ausgeführt, dass der Vortrieb durch den elektrischen Antrieb kleiner ist als die Haft- und/oder Rollreibung, sodass das

Fachpersonal beim Verschieben des Systems auf der Schiene nur unterstützt wird. In einer anderen Ausgestaltung ist das mobile System so ausgeführt, dass der Vortrieb durch den elektrischen Antrieb größer ist als die Haft- und/oder Rollreibung, sodass die mobile Vorrichtung aktiv gebremst werden muss. In beiden Ausgestaltungen erfolgt der Vortrieb durch den elektrischen Antrieb aber nur insofern, dass die Schienenbearbeitungsvorrichtung auch im Kontakt mit einer Schiene steht.

Der elektrische Antrieb dient also primär der Schienenbearbeitung - und nicht dem Vortrieb des mobilen Systems.

In einer bevorzugten Ausführungsform weist das mobile System nur eine Maschine auf, nämlich jene des elektrischen Antriebes, der insbesondere der Schienenbearbeitung dient.

Bevorzugt ist die Maschine als elektrische Maschine, insbesondere als, bevorzugt drehzahlgeregelte, Axialfluss-Drehstrom-Maschine ausgeführt. Durch die Drehzahlregelung weist die elektrische Maschine einen ausreichend großen Stellbereich auf, sodass auf ein Getriebe verzichtet werden kann. Der elektrische Antrieb und/oder das mobile System sind also insbesondre im mechanischen Strang zwischen elektrischer Maschine und Schienenbearbeitungsvorrichtung getriebelos ausgeführt. Hierdurch ist das mobile System deutlich wartungsärmer, insbesondere da keine Späne, die bei der Bearbeitung der Schiene entstehen können, in das Getriebe gelangen, und dieses beschädigen oder gar zerstören können.

Bevorzugt ist die Schienenbearbeitungsvorrichtung, und insbesondere der Schienenbearbeitungskopf, so an dem mobilen System angeordnet, dass die Schienenbearbeitungsvorrichtung das mobile System vorwärts zieht, sofern der Schienenbearbeitungskopf mit der Schiene in Kontakt steht.

Bevorzugt wird die Schienenbearbeitungseinheit manuell betätigt, beispielsweise über ein Stellrad oder dergleichen. Bevorzugt erfolgt die Bedienung der Schienenbearbeitungseinheit durch Fachpersonal.

In einer bevorzugten Ausführungsform ist der elektrische Antrieb des mobilen Systems batterie-elektrisch ausgeführt. Dies bedeutet insbesondere, dass das mobile System mittels eines elektrischen Speichers betrieben wird. Durch den elektrischen Speicher kann auf das Schleppkabel - welches bei netzgespeisten Antrieben notwendig ist - verzichtet werden. Durch den Wegfall des Schleppkabels wird die Handhabung des mobilen Systems für das Fachpersonal enorm erleichtert.

In einer bevorzugten Ausführungsform weist das mobile System wenigstens eine Aufnahme für einen elektrischen Speicher auf, insbesondere für einen modularen elektrischen Speicher. Bevorzugt weist das mobile System ein oder mehr Module eines elektrischen Speichers auf, die elektrisch ggf. parallel miteinander verschaltet sind. Auf dem mobilen System können dann beispielsweise weitere Module mittels einer Klickverbindung oder dergleichen angeschlossen werden, wobei ein oder mehrere Module für den aktiven Betrieb des mobilen Systems verwendet werden. Durch einen derartigen Aufbau wird sodann die Betriebszeit des mobilen Systems vervielfacht, wenn Batteriemodule parallelgeschaltet werden.

In einer bevorzugten Ausführungsform weist das mobile System wenigstens eine Stromregelung für den elektrischen Speicher auf, insbesondere eine Stromregelung mit Begrenzung, wobei die Begrenzung bevorzugt von der Temperatur und/oder dem Ladezustand des elektrischen Speichers abhängt. Durch eine derartige Ausführung kann insbesondere sichergestellt werden, dass bei der Verwendung von mehreren elektrisch parallelgeschalteten Modulen, diese elektrisch-gleichmäßig belastet werden.

Bevorzugt weist der elektrische Speicher eine Betriebsspannung von unter 200V, insbesondere unter 120V auf, bevorzugt zwischen 40V und 60V. Durch eine derartig niedrige Betriebsspannung kann sichergestellt werden, dass das Fachpersonal bei Fehlbedienung der mobilen Arbeitsmaschine gegen gefährdende elektrische Ströme bei Körperdurchströmungen geschützt ist.

Vorzugsweise weist das mobile System eine Messeinrichtung auf, die dazu eingerichtet ist, eine Beschaffenheit der Schiene zu erfassen, insbesondere zu be- und/oder auszuwerten.

Vorzugsweise weist das mobile System eine Steuereinrichtung auf, die dazu eingerichtet ist, die Schienenbearbeitungsvorrichtung zu verstellen und/oder dazu eingerichtet ist, eine Betriebsdatenanalyse durchzuführen und/oder dazu einrichtet ist, das mobile System und/oder die Schienenbearbeitungsvorrichtung in Abhängigkeit von Betriebsdaten, insbesondere einer Betriebsdatenanalyse, zu steuern, bevorzugt automatisiert oder intelligent zu steuern.

Es wird also insbesondere vorgeschlagen, dass das mobile System eine Steuereinrichtung aufweist, die eine Betriebsdatenanalyse durchführt und dann das mobile System bzw. deren Komponenten in Abhängigkeit der Betriebsdatenanalyse optimiert steuert.

Die Betriebsdatenanalyse kann beispielsweise in Echtzeit erfolgen und alle wesentlichen Betriebsdaten des mobilen Systems umfassen, wie beispielsweise die Schleifleistung, die Schleifdrehzahl, das Schleifdrehmoment oder Betriebsdaten des elektrischen Speichers, wie beispielsweise Batteriestrom, Ladezustand und dergleichen, wie elektrische Motorleistung oder Umgebungstemperatur.

Durch das Erfassen und Auswerten der relevanten Betriebsdaten kann das mobile System intelligent und/oder automatisiert gesteuert werden.

Vorzugsweise weist das mobile System wenigstens ein Schaltmittel auf, das dazu eingerichtet ist, einen Schaltimpuls an einem Gleisschaltmittel zu erzeugen, insbesondere um eine Weiche zu stellen.

Vorzugsweise weist das mobile System wenigstens ein Absaugsystem zur Entfernung von Spänen auf, die durch die Bearbeitung der Schiene mittels des Schienenbearbeitungsvorrichtung entstanden sind.

Die vorliegende Erfindung wird nun nachfolgend exemplarisch anhand von Ausführungsbeispielen unter Bezugnahme auf die begleitenden Figuren näher erläutert. Dabei zeigen:
- Fig. 1: eine generische Vorrichtung der gattungsspezifischen Art zur Instandhaltung einer Schiene in einer Ausführungsform;
- Fig. 2: ein Aufbau einer Axialfluss-Drehstrom-Maschine in einer Ausführungsform; und
- Fig. 3: ein Aufbau eines elektrischen Antriebes in einer Ausführungsform.

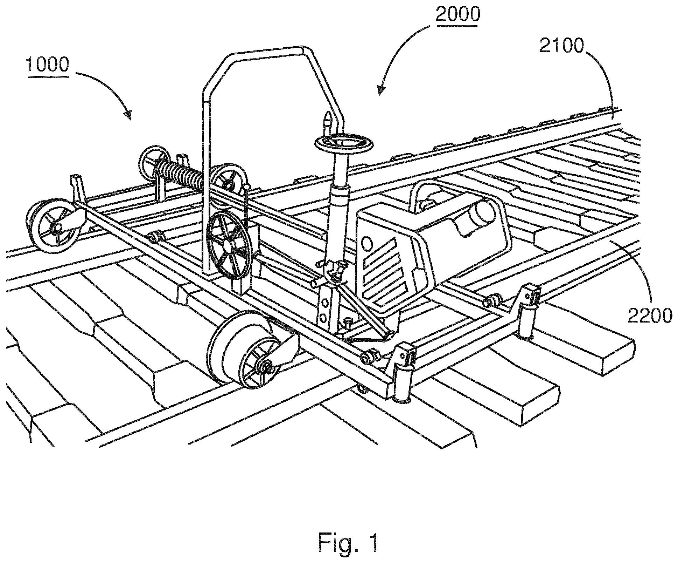

Figur 1 zeigt ein mobiles System 1000 zur Instandhaltung einer Schiene, wobei das mobile System 1000 auf einem Gleis 2000 angeordnet ist, welches zwei parallele Schienen 2100, 2200 umfasst.

Das mobile System 1000 umfasst ein Fahrgestell 1100, ein Fahrwerk 1200, eine Schienenbearbeitungsvorrichtung 1300 und einen elektrischen Antrieb 1400.

Bevorzugt ist das mobile System 1000 und/oder die Schienenbearbeitungsvorrichtung 1300 und/oder der elektrische Antrieb 1400 wie vorstehend und/oder nachstehend beschrieben ausgeführt.

In einer bevorzugt Ausführungsform sind das Fahrgestell 1100 und das Fahrwerk 1200 auf die instandzuhaltenden Schienen angepasst, beispielsweise in der sogenannten Spurbreite. Das mobile System 1000, und insbesondere das Fahrgestell 1100 und das Fahrwerk 1200, ist dazu eingerichtet, dass die Spurbreite einstellbar ist. Bevorzugt kann die Spurbreite wenigstens zwischen Normal-, Breit- oder Schmalspur verstellt werden.

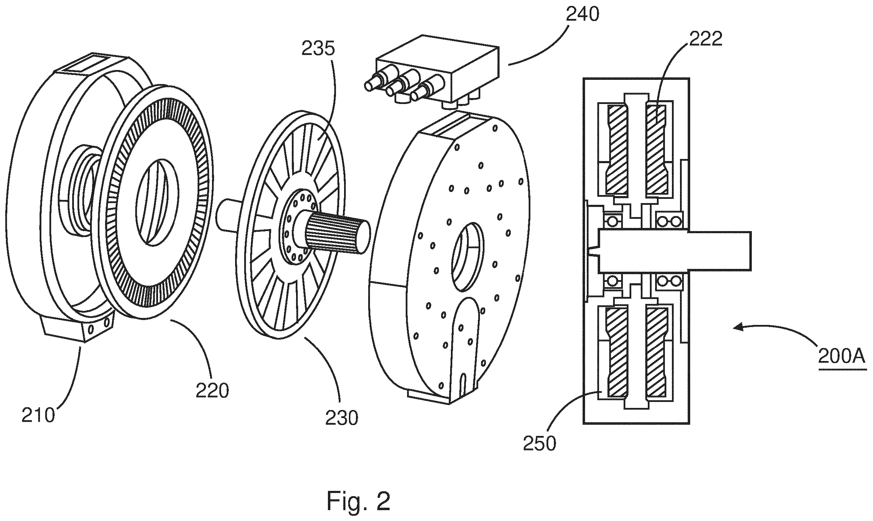

Fig. 2 zeigt den Aufbau einer Axialfluss-Drehstrom-Maschine in einer Explosionsansicht 200 und einem Querschnitt 200A.

Die Axialfluss-Drehstrom-Maschine umfasst ein Gehäuse 210 in dem ein Statorteil 220 und ein Rotor 230 angeordnet sind.

Auf dem Stator 220 sind Statorwicklungen 222 eines dreiphasigen elektrischen Systems angeordnet. Auf dem Rotor 230 sind Permanent-Magnete 232 angeordnet.

Die Statorwicklungen 222 und die Permanent-Magneten 232 sind dabei so angeordnet, dass sich ein axialer Magnetfluss durch den Luftspalt zwischen Stator 220 und Rotor 230 einstellt.

Ferner weist die Axialfluss-Drehstrom-Maschine einen Klemmenkasten 240 und einen Kühlring 250 auf.

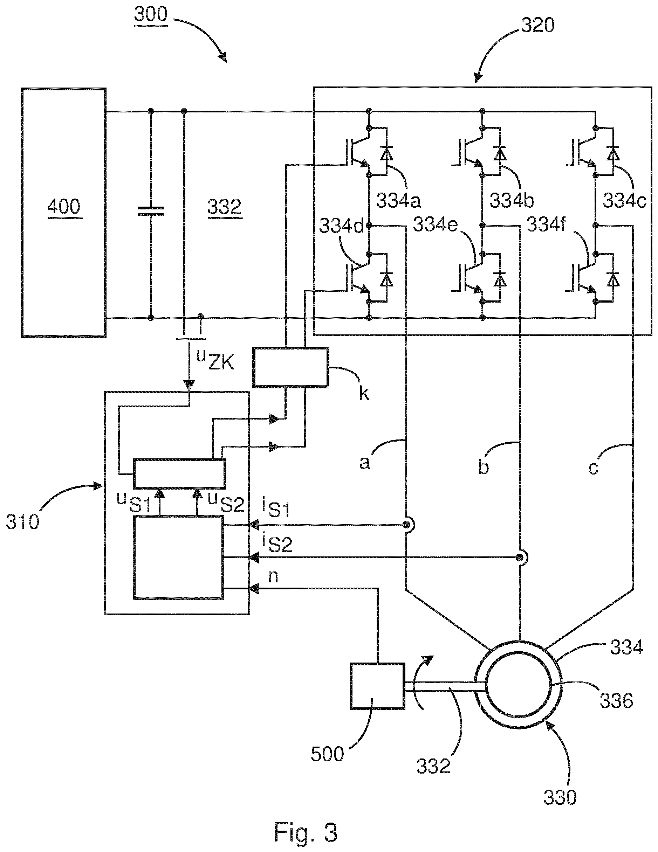

Fig. 3 zeigt schematisch einen elektrischen Strang eines hierin beschriebenen elektrischen Antriebs 300 bzw. eines mobilen Systems 1000, insbesondere in einem Blockschaltbild.

Der elektrische Antrieb 300 umfasst eine Mikroelektronik 310, eine Leistungselektronik 320 und eine elektrische Maschine 330.

Der elektrische Antrieb 300 ist elektrisch, über die Leistungselektronik 320, und insbesondere einem Zwischenkreis 322 mit einem elektrischen Speicher 400 und mechanisch, über die elektrische Maschine 330, und insbesondere eine Welle 332, mit einer Schienenbearbeitungsvorrichtung 500 verbunden.

Die Mikroelektronik 310 besteht im Wesentlichen aus einer Steuereinheit und die Leistungselektronik besteht im Wesentlichen aus sechs Leistungsschaltern 334a...f, die jeweils paarweise das Spannungspotential einer einzelnen Phase des 3-phasigen Systems a, b, c steuern, welches an den Stator 334 der elektrischen Maschine 330 angeschlossen ist. Bevorzugt ist die Leistungselektronik 320 dabei als Pulswechselrichter ausgeführt.

Die Mikroelektronik 310 ist mit Messmitteln verbunden, die wie vorstehend beschrieben, bestimmte mechanische und/oder elektrische Größen erfassen. Die Mikroelektronik 310 generiert aus den so erfassten Werten, Soll- und/oder Steuergrößen, um den elektrischen Antrieb zu steuern.

Beispielsweise wird der Phasenstrom der Phasen a, b, c erfasst und als Messsignale iS1, iS2, iS3 zur Verfügung gestellt. In einer bevorzugten Ausführungsform, um Sensorik einzusparen, werden ausschließlich 2 Phasen erfasst.

Beispielsweise wird die mechanische Drehzahl n des Rotors 336 erfasst und/oder durch ein Modell zur Verfügung gestellt.

Beispielsweise wird die Zwischenkreisspannung uZK erfasst.

Aus diesen so erfassten und/oder bestimmten Werten bestimmt dann die Mikroelektronik 310 mittels Regelungs- und Steueralgorithmen sowie Modulationsverfahren die Steuerwerte für die Leistungselektronik 320, insbesondere für die Gate-Treiber k der Leistungsschalter 334a ...f. Bevorzugt erfolgt die Steuerung der Leistungsschalter 334a ...f dabei mittels einer feldorientierten Regelung.

## Patentansprüche

1. Elektrischer Antrieb (300) für ein, bevorzugt mobiles, System zur Instandhaltung einer Schiene, insbesondere zur Weicheninstandhaltung, umfassend:
- eine elektrische Maschine, die dazu eingerichtet ist, eine elektrische Energie in ein mechanisches Drehmoment zu wandeln, wobei die elektrische Maschine:
- drehmomentübertragend mit einer Schienenbearbeitungsvorrichtung verbindbar ist; und
- als Axialfluss-Drehstrom-Maschine ausgebildet ist.

2. Elektrischer Antrieb (300) nach Anspruch 1, wobei die elektrische Maschine als permanentmagneterregte Synchronmaschine mit Axialfluss oder als Asynchronmaschine mit Axialfluss ausgebildet ist.

3. Elektrischer Antrieb (300) nach Anspruch 1 oder 2, wobei
- die elektrische Maschine mit Doppel-Stator und Einzel-Rotor oder Einzel-Stator und Doppel-Rotor oder Einzel-Stator-Einzel-Rotor ausgeführt ist.

4. Elektrischer Antrieb (300) nach einem der vorstehenden Ansprüche, ferner umfassend:
- eine Steuereinheit, die dazu eingerichtet ist, die elektrische Maschine feldorientiert zu regeln.

5. Elektrischer Antrieb (300) nach Anspruch 4, wobei
- die Steuereinheit dazu eingerichtet ist, die elektrische Maschine in ihrer Drehzahl zu regeln, insbesondere mittels wenigstens einem der nachfolgenden Liste, umfassend:
- Phasenstrom-Drehzahl-Erfassung;
- Zwischenkreisstrom-Drehzahl-Erfassung;
- Zwischenkreisspannung-Phasenstrom-Erfassung;
- Zwischenkreisspannung-Zwischenkreisstrom-Erfassung.
- Zwischenkreisspannung-Drehzahl-Erfassung.

6. Elektrischer Antrieb (300) nach einem der vorstehenden Ansprüche, ferner umfassend:
- einen Anschluss für einen elektrischen Speicher, insbesondere Akkumulator, und/oder einen bzw. den elektrischen Speicher, insbesondere Akkumulator, wobei der elektrische Speicher dazu eingerichtet ist, die elektrische Maschine mit der elektrischen Energie zu versorgen.

7. Elektrischer Antrieb nach einem der vorstehenden Ansprüche, ferner umfassend:
- einen Umrichter, der zwischen einem bzw. dem elektrischen Speicher und der elektrischen Maschine angeordnet ist, wobei der Umrichter dazu eingerichtet ist, die elektrische Maschine mit elektrischer Energie aus dem elektrischen Speicher zu versorgen.

8. Elektrischer Antrieb nach einem der vorstehenden Ansprüche, wobei
- der elektrische Antrieb keine Drehzahlerfassung und/oder kein Getriebe aufweist.

9. Elektrischer Antrieb nach einem der Ansprüche 1 bis 8, ferner umfassend:
- ein Messmittel, das dazu eingerichtet ist, eine mechanische Größe, bevorzugt eine Drehzahl und/oder das mechanische Drehmoment, der elektrischen Maschine, und insbesondere für deren Regelung, zu erfassen und/oder
- ein Messmittel, das dazu eingerichtet ist, eine elektrische Größe, bevorzugt einen Statorstrom, der elektrischen Maschine, und insbesondere für deren Regelung, zu erfassen.

10. Mobiles System (1000) zur Instandhaltung einer Schiene, insbesondere zur Weicheninstandhaltung, umfassend:
- ein Fahrgestell (1100);
- ein Fahrwerk (1200);
- einen elektrischen Antrieb (1300), der nach einem der Ansprüche 1 bis 9 ausgebildet ist; und
- eine Schienenbearbeitungsvorrichtung (1400); wobei
- der elektrische Antrieb (1300) drehmomentübertragend mit der Schienenbearbeitungsvorrichtung (1400) verbunden ist.

11. Mobiles System nach Anspruch 10, wobei
- die Schienenbearbeitungsvorrichtung wenigstens eine Schienenbearbeitungseinheit, bevorzugt eine Schleifeinrichtung und/oder eine Riffeleinrichtung und/oder eine Entgratungsvorrichtung aufweist, die dazu eingerichtet ist, eine Beschaffenheit der Schiene zu modifizieren.

12. Mobiles System nach Anspruch 10 oder 11, ferner umfassend:
- eine Messeinrichtung, die dazu eingerichtet ist, eine Beschaffenheit der Schiene zu erfassen, insbesondere zu be- und/oder auszuwerten.

13. Mobiles System nach einem der Ansprüche 10 bis 12, ferner umfassend:
- eine Steuereinrichtung, die dazu eingerichtet ist, die Schienenbearbeitungsvorrichtung zu verstellen und/oder dazu eingerichtet ist, eine Betriebsdatenanalyse durchzuführen und/oder dazu einrichtet ist, das mobile System und/oder die Schienenbearbeitungsvorrichtung in Abhängigkeit von Betriebsdaten, insbesondere einer Betriebsdatenanalyse, zu steuern, bevorzugt automatisiert oder intelligent zu steuern.

14. Mobiles System nach einem der Ansprüche 10 bis 13, ferner umfassend:
- ein Schaltmittel, das dazu eingerichtet ist, einen Schaltimpuls an einem Gleisschaltmittel zu erzeugen, insbesondere um eine Weiche zu stellen.

15. Mobiles System nach einem der Ansprüche 10 bis 14, ferner umfassend:
- ein Absaugsystem zur Entfernung von Spänen, die durch die Bearbeitung der Schiene mittels des Schienenbearbeitungsvorrichtung entstanden sind.
